# EUROPEAN PATENT SPECIFICATION

(11) **EP 3 148 932 B1**
(45) Date of publication and mention of the grant of the patent: **26.04.2023**
(21) Application number: 15730702.6
(22) Date of filing: 29.05.2015
(51) Int. Cl.: C01B 32/19

(54) **METHOD FOR PRODUCING GRAPHENE FLAKES BY DIRECT EXFOLIATION OF GRAPHITE**
VERFAHREN ZUR HERSTELLUNG VON GRAPHENFLOCKEN DURCH DIREKTE GRAPHITEXFOLIATION
PROCÉDÉ DE PRODUCTION DE LAMELLES DE GRAPHÈNE PAR EXFOLIATION DIRECTE DE GRAPHITE

(30) Priority: 30.05.2014 PL 40837714
(43) Date of publication of application: 05.04.2017
(73) Proprietor: SIEC BADAWCZA LUKASIEWICZ - INSTYTUT MIKROELEKTRONIKI I FOTONIKI, 02-668 Warszawa (PL)
(72) Inventor: LIPINSKA, Ludwika, PL-04-346 Warszawa (PL); AKSIENIONEK, Magdalena, PL-03-149 Warszawa (PL); LEPECKI, Michal, PL-26-900 Kozienice (PL); MARCJANIUK, Andrzej, PL-03-329 Warszawa (PL); WOLUNTARSKI, Michal, PL-03-193 Warszawa (PL); CENDROWSKI, Slawomir, PL-01-908 Warszawa (PL)
(74) Representative: AOMB Polska Sp. z.o.o.
(86) International application number: PCT/EP2015/061987
(87) International publication number: WO 2015/181362

(56) References cited:
- US-A1- 2010 047 154
- US-A1- 2013 108 540
- YANG C ET AL: "Process conditions of exfoliated single-layer graphite", ADVANCED MATERIALS RESEARCH - FRONTIERS OF ADVANCED MATERIALS AND ENGINEERING TECHNOLOGY, FAMET 2012 2012 TRANS TECH PUBLICATIONS DEU, vol. 430-432, 2012, pages 350-354, XP002743945, DOI: 10.4028/WWW.SCIENTIFIC.NET/AMR.430-432.350
- OGINO I ET AL: "Exfoliation of graphite oxide in water without sonication: Bridging length scales from nanosheets to macroscopic materials", CHEMISTRY OF MATERIALS 20140527 AMERICAN CHEMICAL SOCIETY USA, vol. 26, no. 10, 27 May 2014 (2014-05-27), pages 3334-3339, XP002743946, DOI: 10.1021/CM501305C
- DATABASE CA [Online] CHEMICAL ABSTRACTS SERVICE, COLUMBUS, OHIO, US; 22 August 2013 (2013-08-22), TAN, BIN: "Preparation method of few-layer graphene", XP002743947, retrieved from STN Database accession no. 159:307061 & CN 103 224 230 A (PEOP. REP. CHINA) 31 July 2013 (2013-07-31)
- DATABASE CA [Online] CHEMICAL ABSTRACTS SERVICE, COLUMBUS, OHIO, US; 20 December 2012 (2012-12-20), YANG, CHENG ET AL: "Preparation of graphene oxide by cold expansion and exfoliation method", XP002743948, retrieved from STN Database accession no. 158:19117 & CN 102 786 045 A (BEIJING INSTITUTE OF AERONAUTICAL MATERIALS, AVIATION INDUSTRY CORPORA) 21 November 2012 (2012-11-21)

## Description

The object of the invention is a method for producing graphene flakes. More particularly, the invention relates to a method for producing graphene flakes by direct exfoliation of graphite in solutions, especially in aqueous solutions. The graphite used in the method can be synthetic, natural, intercalated, heat- or microwave-expanded flake graphite.

Graphene flakes obtained by the method of direct exfoliation of graphite in solutions have a crystal structure with a low defect density on the flake surface, which results in high electrical conductivity and good mechanical properties [Athanasios B. et al, Liquid-Phase Exfoliation of Graphite Towards Solubilized Graphenes, Small 5(16) (2009) 1841]. Due to the said advantages, it has a lot of potential applications. Its mechanical properties and the fact that it is much lighter than steel make it very attractive for automotive and aerospace industries, by creating opportunities to reduce mass of vehicles and airplanes. This will allow for the use of smaller amounts of fuel and reduction of pollutants emitted into the atmosphere. Due to its electrical properties, graphene obtained by direct exfoliation of graphite in solutions can be applied in electronics (e.g. conductive inks and pastes [Han X. et al, Scalable, printable, surfactant-free graphene ink directly from graphite, Nanotechnology 24 (2013) 205304]), optoelectronics [ Zhipei S. et al, Graphene Mode-Locked Ultrafast Laser, ACS Nano 4(2) (2010)], it can also be an excellent material for electrodes in supercapacitors and lithium- ion batteries.

Sizes of graphene flakes obtained by direct exfoliation of graphite in solutions can vary from a few to several hundred microns. Such a large range of sizes is closely correlated with the size of graphite flakes before the process of sonication, which constitute a precursor of graphene flakes, as a final product. The method of direct exfoliation of graphite in solutions allows obtaining flakes with a single layer to a few or a dozen layers depending on the process conditions.

Graphene flakes by direct exfoliation of graphite in solutions were first obtained in 2008 by a group from Manchester University, the solvent used was dimethylformamide (DMF), exfoliation of graphite was supported by ultrasounds [ Blake P. et al, Graphene-Based Liquid Crystal Device, Nano Letters 8 (6) (2008) 1704]. In the same year, a group from Ireland, Trinity College Dublin, conducted successful attempts with other solvents, among others with the much less toxic N-methyl-2-pyrrolidone (NMP) [Hernandez Y. et al, High-yield production of graphene by liquid-phase exfoliation of graphite, Nature Nanotechnology 3(9) (2008) 563]. Unfortunately, the efficiency of these methods is very low, a concentration of the suspension of graphene flakes of the order of 0.1-1 mg/ml is obtained, which, with high costs of reagents, makes it very expensive. Another drawback is the difficulty in processing the suspensions of graphene flakes, dispersed in organic solvents to a powder. Since 2008, intensive efforts to increase the efficiency of the method of direct exfoliation in solutions [ Longxiu Z. et al, Highquality production of graphene by liquid-phase exfoliation of expanded graphite, Materials Chemistry and Physics 137 (2013) 984; Dhakate S.R. et al, An approach to produce single and double layer graphene from re-exfoliation of expanded graphite, Carbon 49 (2011) 1946] have been made. Other solvents used were, e.g.: benzene, hexafluorobenzene [ Oyer A.J. et al, Stabilization of graphene sheets by structured benzene/hexafliorobenzene mixed solvent, JACS 134 (2012) 5018] or ionic liquids [ Sutto T.E. et al, X-ray diffraction studies of electrochemical graphite intercalation compounds of ionic liquids, Electrochimica Acta 54 (2009) 5648]. Attempts to obtain graphene by a solvent exchange method [ X. Zhang et al; Dispersion of graphene in ethanol using a simple solvent exchange method; Chem. Comm. 46 (2010) 7539-7541] and with the use of solubilisers [ A. B. Bourlinos et al; Liquid-phase exfoliation of graphite towards solubilized graphenes; Small: Nano Micro 16 (2009) 1841-1845] have been also made.

An ecological approach assumes avoidance of highly toxic chemicals, such as the above-mentioned NMP, DMF, benzene, therefore attempts towards the use of cheap, safe and commercially available solvents, such as water or ethanol [ Yi M. et al, A mixed-solvent strategy for facile and green preparation of graphene by liquid-phase exfoliation of graphite, Journal of Nanoparticle Research 14 (2012) 1003; Liu W.-W. et al, Exfoliation and dispersion of graphene in ethanol-water mixtures, Frontiers of Materials Science 6(2) (2012) 176] and aqueous solutions with addition of surface active agents [ Sajini Vadukumpully et al, Cationic surfactant mediated exfoliation of graphite into graphene flakes, Carbon 47(14) (2009) 3288], have been also made. However, previous efforts by numerous research centres have not produced any breakthrough in the exfoliation of graphite in solutions with the use of ultrasound energy [ Wecheng Du et al, From graphite to graphene: direct liquid-pase exfoliation of graphite to produce single- and few-layered pristine graphene, Journal of Materials Chemistry A, 1 (2013) 10592].

Therefore, other strategies have been also used, e.g.: obtaining graphene by means of C0₂ being in a supercritical state [ N. W. Pu, C. A. Wang, Y. Sung, Y. M. Liu, M. D. Ger; "Production of few-layer graphene by supercritical C02 exfoliation of graphite"; Mat. Lett. 63 (2009) 1987-1989] or a technique that uses a pulsed laser [ M. Qian, Y. S. Zhou, Y. Gao, T. Feng, Z. Sun, L. Jiang, Y. F. Lu; "Production of few-layer graphene through liquid-phase pulsed laser exfoliation of highly ordered pyrolytic graphite"; App. Surf. Sc. 258 (2012) 9092-9095]. Unfortunately, they require the use of special equipment or installations, and the efficiency of these processes is not impressive either.

Ogino I. et al. in "Exfoliation of graphite oxide in water without sonication: bridging length scales from nanosheets to macroscopic materials" Chem Mater 2014, 26, 3334-3339 disclose a sonication-free exfoliation of graphite oxide in water by repetitive freeze-thaw cycles. The article is focused on graphite oxide as a starting material, but the final conclusions include a suggestion that the general concept of exfoliating layered materials using the phase change of water may me applicable to other layered materials exhibiting suitable interfacial interactions with water. On the other hand, it was a well-known fact that unlike the graphite oxide, flake graphite is highly hydrophobic and thus poorly penetrable by water.

Therefore, there is a need to develop a cheap and efficient method for producing graphene flakes with the use of safe and commercially available solvents such as water.

The idea behind the invention being applied is the use of anomalous thermal expansion of water which increases its volume during freezing. This phenomenon allows for the use of aqueous solutions for effective intercalation of graphite. To allow water molecules to penetrate between layers of carbon, a compound which lowers surface tension is added, thereby ensuring an excellent wettability of graphite. The use of mild ultrasounds (ultrasonic bath) also helps in wetting the graphite. There are not any literature reports on the use of this strategy in the exfoliation of graphite.

According to the Invention, the method for producing graphene flakes by direct exfoliation of graphite is characterised in that it comprises the following steps:
a) an aqueous suspension of graphite with addition of one or more surface active agents is prepared;
b) the suspension is frozen;
c) the suspension is dried, thereby obtaining graphene flakes.

Preferably, in step a), a suspension of graphite in water at a concentration of 1 g/1 to 5 g/1 is prepared.

Preferably, in step a), preparation of the mixture is supported by ultrasounds, preferably applied by an ultrasonic probe or ultrasonic bath.

Preferably, in step b), freezing is carried out using one or more of the following means: freezing equipment (freezer), cryogenic freezing, liquid nitrogen, liquid helium, dry ice.

Preferably, in step c), drying is carried out using one or more of the following means: by sublimation, by spraying, in an evaporator, in a dryer, preferably in the temperature range of 80-100°C, and more preferably at 90°C, in a vacuum dryer, preferably in the temperature range of 80-100°C, and more preferably at 90°C.

Preferably, step c) of drying is carried out immediately after step b) of freezing, especially freezing with liquid nitrogen or liquid helium.

Preferably, step c) of drying is carried out after prior melting of the frozen mixture.

Preferably, step c) of drying is carried out by spraying or in an evaporator.

Preferably, the suspension frozen in step b) is melted and treated with ultrasounds.

Preferably, the suspension is melted and frozen again. More preferably a cycle of melting and freezing is repeated at least once.

Preferably, before step a), graphite is pre-prepared by intercalation with acids and by heat- and microwave-expansion. More preferably, the intercalation of the graphite with acid and by heatand microwave expansion is repeated at least once.

To sum up, in the method for producing graphene flakes according to the invention, graphene flakes trapped in graphite's structure are separated from each other by ice crystals during freezing. In the first place, graphite should be soaked in water with addition of one or more surface active agents, facilitating wetting of graphite flakes which have a highly hydrophobic character. Soaking can be supported by ultrasounds. The aqueous suspension with graphite flakes is placed in a container in a freezer. Water which has penetrated into the spaces between carbon plates crystallises under the influence of low temperature and separates successive the carbon layers. The frozen suspension can be melted and dried or dried directly by sublimation. Natural or synthetic graphite, with large or small flakes, can be used in the process. Appropriate pre-preparation of graphite by intercalation with acids and by heat- and microwave-expansion (initial separation of carbon layers in the graphite) is preferable. The preparatory processes can be carried out several times. The processes of freezing/melting of the graphite suspension can be carried out many times.

### Preferred Embodiments of the Invention:

The invention will be presented in greater detail in preferred embodiments, with reference to the accompanying drawings:
Fig. 1 shows a scanning microscope image of graphene flakes obtained according to Example I;
Fig. 2 shows a Raman spectrum of graphene flakes obtained according to Example II;
Fig. 3 shows a Raman spectrum of graphene flakes obtained according to Example III;
Fig. 4 shows a scanning microscope image of graphene flakes obtained according to Example IV;
Fig. 5 shows a Raman spectrum of graphene flakes obtained according to Example V;
Fig. 6 shows a Raman spectrum of graphene flakes obtained according to Example VI.

### Example I

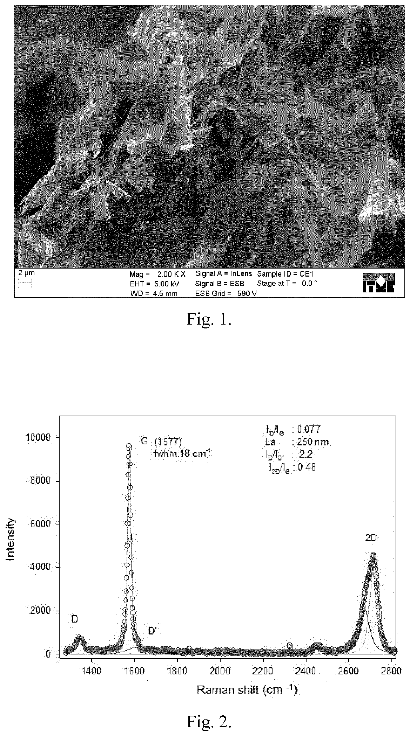

Natural flake graphite with large flakes was intercalated with acids (sulfuric and nitric acids, and with the ratio of 4: 1) and subjected to heat treatment in an oven at the temperature of 1000°C for the time of 30 sec. During the process, the graphite was expanded. Then, the so prepared graphite was intercalated again and expanded under identical conditions. At the next stage, the graphite was soaked in water (lg of graphite per 200 ml of H₂0) with a surface active agent (fluorinated alcohol substituted glycol) in the amount of 0.2 ml. Soaking lasted 24-48h at the temperature of 50°C. After this time, the suspension was placed in an ultrasound bath at the temperature of 50°C and with the power of 750 W for the time of 45 min. Then, the suspension was frozen in a freezer and dried by sublimation in a freeze dryer, (lyophiliser) lg of graphene flakes was obtained. A microscopic image of the obtained flakes is shown in Fig. 1.

### Example II

Natural flake graphite with large flakes was intercalated with acids (sulfuric and nitric acids, and with the ratio of 4: 1) and subjected to heat treatment in an oven at the temperature of 1000°C for the time of 30 sec. This operation was repeated still three times. At the next stage, the graphite was soaked in water (1 g of graphite per 200 ml of H₂0) with a surface active agent (fluorinated alcohol substituted glycol) in the amount of 0.2 ml. Soaking lasted 24-48h at the temperature of 50°C. After this time, the suspension was placed in an ultrasound bath at the temperature of 50°C and with the power of 750 W for the time of 45 min. Then, the suspension was frozen in a freezer and dried by sublimation in a freeze dryer. 1 g of graphene flakes was obtained. A Raman spectrum of the obtained flakes is shown in Fig. 2.

### Example III

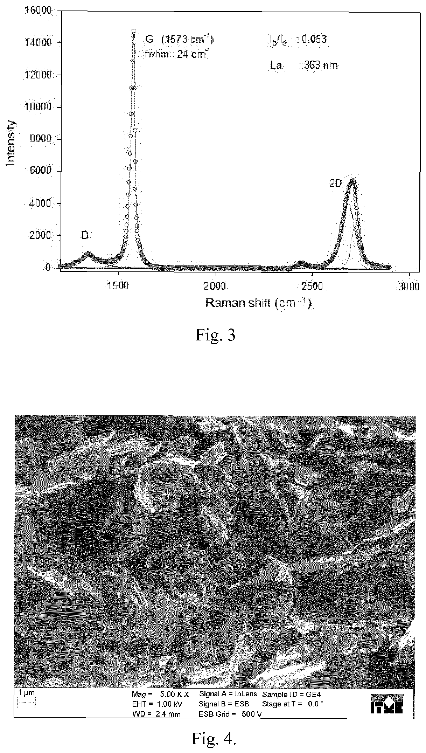

Natural flake graphite with small flakes was intercalated with acids (sulfuric and nitric acids, and with the ratio of 4: 1) and subjected to heat treatment in an oven at the temperature of 1000°C for the time of 30 sec. During the process, the graphite was expanded. Then, the so prepared graphite was intercalated again and expanded under identical conditions. At the next stage, the graphite was soaked in water (1 g of graphite per 200 ml of H₂0) with a surface active agent (fluorinated alcohol substituted glycol) in the amount of 0.2 ml. Soaking lasted 24-48h at the temperature of 50°C. After this time, the suspension was placed in an ultrasound washer at the temperature of 50°C and with the power of 750 W for the time of 45 min. Then, the suspension was frozen in a freezer and dried by sublimation in a freeze dryer. 1 g of graphene flakes was obtained. A Raman spectrum of the obtained flakes is shown in Fig. 3.

### Example IV

Natural flake graphite with small flakes was intercalated with acids (sulfuric and nitric acids, and with the ratio of 4: 1) and subjected to heat treatment in an oven at the temperature of 1000°C for the time of 30 sec. During the process, the graphite was expanded. Then, the so prepared graphite was intercalated again and expanded under identical conditions. At the next stage, the graphite was soaked in water (1 g of graphite per 200 ml of H₂0) with a surface active agent (fluorinated alcohol substituted glycol) in the amount of 0.2 ml. Soaking lasted 24-48h at the temperature of 50°C. After this time, the suspension was placed in an ultrasound bath at the temperature of 50°C and with the power of 750 W for the time of 45 min. Then, the suspension was frozen in a freezer and melted, followed by drying in an oven at the temperature of 90°C. 1 g of graphene flakes was obtained. A microscopic image of the obtained flakes is shown in Fig. 4.

### Example V

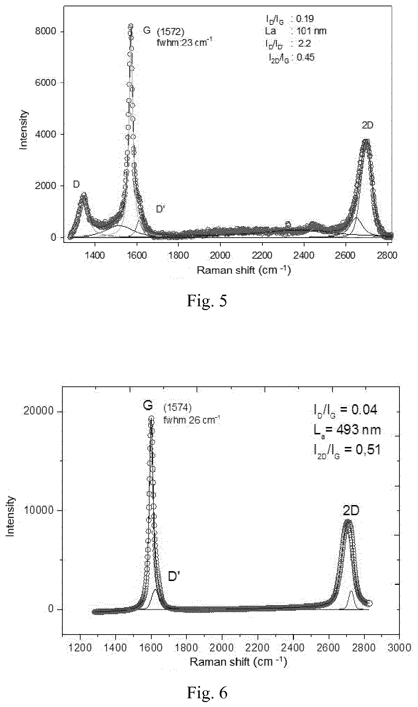

Natural flake graphite with very small flakes was intercalated with acids (sulfuric and nitric acids, and with the ratio of 4: 1) and subjected to heat treatment in an oven at the temperature of 1000°C for the time of 30 sec. During the process, the graphite was expanded. Then, the so prepared graphite was intercalated again and expanded under identical conditions. At the next stage, the graphite was soaked in water (1 g of graphite per 200 ml of H₂0) with a surface active agent (fluorinated alcohol substituted glycol) in the amount of 0.2 ml. Soaking lasted 24-48h at the temperature of 50°C. After this time, the suspension was placed in an ultrasound bath at the temperature of 50°C and with the power of 750 W for the time of 45 min. Then, the suspension was frozen in a freezer and dried by sublimation in a freeze dryer. 1 g of graphene flakes was obtained. A Raman spectrum of the obtained flakes is shown in Fig. 5.

### Example VI

Natural flake graphite with large flakes was intercalated with acids (sulfuric and nitric acids, and with the ratio of 4: 1) and subjected to heat treatment in an oven at the temperature of 1000°C for the time of 30 sec. During the process, the graphite was expanded. Then, the so prepared graphite was intercalated again and expanded under identical conditions. At the next stage, the graphite was soaked in a mixture of sulfuric and nitric acids with the ratio of 4: 1 (lg of graphite per 200 ml of the acid mixture). Soaking lasted 20h at the temperature of 80°C. After this time, the suspension was placed in an ultrasound bath at the temperature of 60°C and with the power of 750 W for the time of 40 min. Then, the suspension was washed off with deionised water to pH = 4.5 and was mixed for additional 24h at the temperature of 50°C; was frozen in a freezer and was dried by sublimation in a freeze dryer. 1 g of graphene flakes was obtained. A Raman spectrum of the obtained flakes is shown in Fig. 6.

## Claims

1. A method for producing graphene flakes by direct exfoliation of flake graphite, **characterised in that** it comprises the following steps:
a) an aqueous suspension of graphite with addition of one or more surface active agents is prepared, thereby allowing water molecules to penetrate the graphite layers;
b) the suspension is frozen, thereby expanding the volume of water between the graphite layers;
c) the suspension is dried, thereby obtaining graphene flakes.

2. The method according to claim 1, **characterised in that** in step a), a suspension of graphite in water at a concentration of 1 g/l to 5 g/l is prepared.

3. The method according to claims 1 or 2, **characterised in that** in step a), preparation of the mixture is supported by ultrasounds, preferably applied by an ultrasonic probe or ultrasonic bath.

4. The method according to any of claims 1- 3, **characterised in that** in step b), freezing is carried out using one or more of the following means: freezing equipment (freezer), cryogenic freezing, liquid nitrogen, liquid helium, dry ice.

5. The method according to any of claims 1-4, **characterised in that** in step c), drying is carried out using one or more of the following means: by sublimation, by spraying, in an evaporator, in a dryer, preferably in the temperature range of 80-100°C, and more preferably at 90°C, in a vacuum dryer, preferably in the temperature range of 80-100°C, and more preferably at 90°C.

6. The method according to any of claims 1-5, **characterised in that** step c) of drying is carried out immediately after step b) of freezing, especially freezing with liquid nitrogen or liquid helium.

7. The method according to any of claims 1-5, **characterised in that** step c) of drying is carried out after prior melting of the frozen mixture.

8. The method according to claim 7, **characterised in that** step c) of drying is carried out by spraying or in an evaporator.

9. The method according to any of claims 1-5, **characterised in that** the suspension frozen in step b) is melted and treated with ultrasounds.

10. The method according to any of claims 1- 5 or 9, **characterised in that** the suspension is melted and froze again..

11. The method according to claim 10, **characterised in that** the cycle of melting and freezing is repeated at least once.

12. The method according to any one of claims 1 to 10, **characterised in that** before step a), graphite is pre-prepared by intercalation with acids and by heat- and microwave-expansion.

13. The method according to claim 12, **characterised in that** the intercalation of the graphite with acid and by heat- and microwave expansion is repeated at least once.

## Patentansprüche

1. Ein Verfahren zur Herstellung von Graphenflocken durch direkte Exfoliation von Flockengraphit, **dadurch gekennzeichnet, dass** es folgende Schritte umfasst:
a) es wird eine wässrige Graphitsuspension unter Zusatz eines oder mehrerer oberflächenaktiver Mittel hergestellt, wodurch Wassermoleküle in die Graphitschichten eindringen können;
b) die Suspension ist gefroren, wodurch das Wasservolumen zwischen den Graphitschichten vergrößert wird;
c) die Suspension ist getrocknet, wodurch Graphenflocken erhalten werden.

2. Das Verfahren nach Anspruch 1, **dadurch gekennzeichnet, dass** in Schritt a) eine Graphitsuspension in Wasser mit einer Konzentration von 1 g/l bis 5 g/l hergestellt wird.

3. Das Verfahren nach Anspruch 1 oder 2, **dadurch gekennzeichnet, dass** in Schritt a) die Herstellung der Mischung durch Ultraschall unterstützt wird, vorzugsweise aufgebracht durch eine Ultraschallsonde oder ein Ultraschallbad.

4. Das Verfahren nach einem der Ansprüche 1 - 3, **dadurch gekennzeichnet, dass** in Schritt b) das Einfrieren unter Verwendung eines oder mehrerer der folgenden Mittel durchgeführt wird: Einfrierausrüstung (Gefriergerät), kryogenes Frosten, flüssiger Stickstoff, flüssiges Helium, Trockeneis.

5. Das Verfahren nach einem der Ansprüche 1 - 4, **dadurch gekennzeichnet, dass** in Schritt c) das Trocknen unter Verwendung eines oder mehrerer der folgenden Mittel durchgeführt wird: durch Sublimation, durch Sprühen, in einem Verdampfer, in einem Trockner, vorzugsweise im Temperaturbereich von 80 - 100 °C und besonders bevorzugt bei 90 °C, in einem Vakuumtrockner, vorzugsweise im Temperaturbereich von 80 - 100 °C und besonders bevorzugt bei 90 °C.

6. Das Verfahren nach einem der Ansprüche 1 - 5, **dadurch gekennzeichnet, dass** der Schritt c) des Trocknens unmittelbar nach dem Schritt b) des Einfrierens durchgeführt wird, insbesondere des Einfrierens mit flüssigem Stickstoff oder flüssigem Helium.

7. Das Verfahren nach einem der Ansprüche 1 - 5, **dadurch gekennzeichnet, dass** der Schritt c) des Trocknens nach dem vorherigen Schmelzen der gefrorenen Mischung durchgeführt wird.

8. Das Verfahren nach Anspruch 7, **dadurch gekennzeichnet, dass** der Schritt c) des Trocknens durch Sprühen oder in einem Verdampfer durchgeführt wird.

9. Das Verfahren nach einem der Ansprüche 1 - 5, **dadurch gekennzeichnet, dass** die in dem Schritt b) eingefrorene Suspension aufgeschmolzen und mit Ultraschall behandelt wird.

10. Das Verfahren nach einem der Ansprüche 1 - 5 oder 9, **dadurch gekennzeichnet, dass** die Suspension aufgeschmolzen und wieder eingefroren wird.

11. Das Verfahren nach Anspruch 10, **dadurch gekennzeichnet, dass** der Zyklus des Schmelzens und Gefrierens mindestens einmal wiederholt wird.

12. Das Verfahren nach einem der Ansprüche 1 bis 10, **dadurch gekennzeichnet, dass** vor dem Schritt a) Graphit durch Interkalation mit Säuren und durch Wärme- und Mikrowellenexpansion vorgefertigt wird.

13. Das Verfahren nach Anspruch 12, **dadurch gekennzeichnet, dass** die Interkalation des Graphits mit Säure und durch Wärme- und Mikrowellenexpansion mindestens einmal wiederholt wird.

## Revendications

1. Procédé de fabrication de flocons de graphène par exfoliation directe de graphite en flocons, **caractérisé en ce qu'**il comprend les étapes suivantes :
a) une suspension aqueuse de graphite additionnée d'un ou plusieurs agents tensioactifs est préparée, permettant ainsi aux molécules d'eau de pénétrer dans les couches de graphite ;
b) la suspension est gelée, augmentant ainsi le volume d'eau entre les couches de graphite ;
c) la suspension est séchée, obtenant ainsi des flocons de graphène.

2. Procédé selon la revendication 1, **caractérisé en ce qu'**à l'étape a), on prépare une suspension de graphite dans l'eau à une concentration de 1 g/l à 5 g/l.

3. Procédé selon les revendications 1 ou 2, **caractérisé en ce qu'**à l'étape a), la préparation du mélange est assistée par des ultrasons, de préférence appliqués par une sonde à ultrasons ou un bain à ultrasons.

4. Procédé selon l'une quelconque des revendications 1 à 3, **caractérisé en ce qu'**à l'étape b), la congélation est réalisée à l'aide d'un ou plusieurs des moyens suivants : équipement de congélation (congélateur), congélation cryogénique, azote liquide, hélium liquide, glace sèche.

5. Procédé selon l'une quelconque des revendications 1 à 4, **caractérisé en ce qu'**à l'étape c), le séchage est effectué en utilisant un ou plusieurs des moyens suivants : par sublimation, par pulvérisation, dans un évaporateur, dans un sécheur, de préférence dans la plage de température de 80-100°C, et plus préférablement à 90°C, dans un sécheur sous vide, de préférence dans la plage de température de 80-100°C, et plus préférablement à 90°C.

6. Procédé selon l'une quelconque des revendications 1 à 5, **caractérisé en ce que** l'étape c) de séchage est réalisée immédiatement après l'étape b) de congélation, notamment congélation à l'azote liquide ou à l'hélium liquide.

7. Procédé selon l'une quelconque des revendications 1 à 5, **caractérisé en ce que** l'étape c) de séchage est réalisée après fusion préalable du mélange congelé.

8. Procédé selon la revendication 7, **caractérisé en ce que** l'étape c) de séchage est réalisée par pulvérisation ou dans un évaporateur.

9. Procédé selon l'une quelconque des revendications 1 à 5, **caractérisé en ce que** la suspension congelée à l'étape b) est fondue et traitée aux ultrasons.

10. Procédé selon l'une quelconque des revendications 1 à 5 ou 9, **caractérisé en ce que** la suspension est fondue et congelée à nouveau.

11. Procédé selon la revendication 10, **caractérisé en ce que** le cycle de fusion et congélation est répété au moins une fois.

12. Procédé selon l'une quelconque des revendications 1 à 10, **caractérisé en ce qu'**avant l'étape a), le graphite est pré-préparé par intercalation avec des acides et par dilatation à la chaleur et aux micro-ondes.

13. Procédé selon la revendication 12, **caractérisé en ce que** l'intercalation du graphite avec un acide et par dilatation à la chaleur et aux micro-ondes est répétée au moins une fois.
